(19) Europäisches Patentamt
European Patent Office
Office européen des brevets

(11) Veröffentlichungsnummer: **0 224 880**
B1

(12) # EUROPÄISCHE PATENTSCHRIFT

(45) Veröffentlichungstag der Patentschrift: 05.07.89

(51) Int. Cl.⁴: C07F 9/30, C07F 9/32, C07F 9/65

(21) Anmeldenummer: 86116508.2

(22) Anmeldetag: 27.11.86

## ERRATUM

| DIE TEXTSTELLE: / TEXT PUBLISHED: / LE PASSAGE SUIVANT: | (SEITE, SPALTE, ZEILE) / (PAGE, COLUMN, LINE) / (PAGE, COLONNE, LIGNE) | | | LAUTET BERICHTIGT: / SHOULD READ: / DEVRAIT ETRE LU: |
|---|---|---|---|---|
| bevorzugt bei -80°C bis -60°C. | 4 | 6 | 57 | bevorzugt bei -80°C bis -60°C durchführt.. |

Tag der Entscheidung über die Berichtigung / Date of decision on rectification: / Date de décision portant ...: 01.09.89

Ausgabe- und Veröffentlichungstag: / Issue and publication date: / Date d'edition et de publication: 08.11.89

Patbl.Nr / EPB no: / Bull. no: 89/45

(19) Europäisches Patentamt
European Patent Office
Office européen des brevets

(11) Veröffentlichungsnummer: **0 224 880**
**B1**

(12) # EUROPÄISCHE PATENTSCHRIFT

(45) Veröffentlichungstag der Patentschrift: **05.07.89**

(51) Int. Cl.⁴: **C07F 9/30,** C07F 9/32, C07F 9/65

(21) Anmeldenummer: **86116508.2**

(22) Anmeldetag: **27.11.86**

(54) **Verfahren zur Herstellung von L-Homoalanin-4-yl(methyl)-phosphinsäure sowie ihrer Alkylester.**

(30) Priorität: **03.12.85 DE 3542645**

(43) Veröffentlichungstag der Anmeldung:
**10.06.87 Patentblatt 87/24**

(45) Bekanntmachung des Hinweises auf die Patenterteilung:
**05.07.89 Patentblatt 89/27**

(84) Benannte Vertragsstaaten:
**AT BE CH DE ES FR GB GR IT LI NL**

(56) Entgegenhaltungen:
**EP-A- 0 127 429**
**DE-A- 3 525 267**

(73) Patentinhaber: **HOECHST AKTIENGESELLSCHAFT, Postfach 80 03 20, D-6230 Frankfurt am Main 80(DE)**

(72) Erfinder: **Zeiss, Hans-Joachim, Dr., Hauptstrasse 127, D-6231 Sulzbach(DE)**

**EP 0 224 880 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von L-Homoalanin-4-yl(methyl)-phosphinsäure(estern) der allgemeinen Formel I

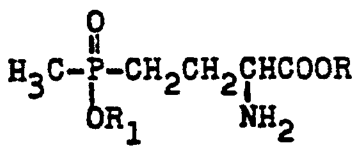

worin R und $R_1$ gleich oder verschieden sind und Wasserstoff oder ($C_1$-$C_6$)-Alkyl
bedeuten, sowie deren Salze mit anorganischen oder organischen Säuren oder Basen.

L-Homoalanin-4-yl(methyl)phosphinsäure, im folgenden L-Phosphinothricin oder kurz L-Ptc genannt, ihre Ester sowie ihre Salze mit organischen oder anorganischen Säuren oder Basen sind, wie in der DE-OS 28 56 260 beschrieben, die wirksamen Enantiomeren der in der DE-OS 27 17 440 beschriebenen herbizid wirksamen Racemate. Laut DE-OS 28 56 260 ist die herbizide Wirkung von L-Ptc gegen zahlreiche mono- und dikotyle, einjährige und mehrjährige Unkräuter doppelt so groß wie die des Racemats. Durch Verwendung von reinem L-Ptc anstelle des Racemats kann daher die Aufwandmenge des Herbizids um die Hälfte reduziert werden, wodurch auch eventuelle, unerwünschte Nebenwirkungen entsprechend verringert werden.

Der breiten Anwendung von L-Ptc standen bisher jedoch die Schwierigkeiten bei seiner Herstellung entgegen.

Zwar werden in der JA-OS 73-85538 und JA-OS 74-31890 die saure bzw. enzymatische Spaltung des L-Ptc enthaltenden Antibiotikums SF-1293 beschrieben, jedoch ist die Herstel lung des letzteren auf fermentativem Wege, wie sie z.B. in der DE-OS 22 36 599 beschrieben ist, sehr aufwendig.

Bekannt ist ferner die Spaltung von N-acylierten D,L-Ptc-Derivaten mit Hilfe von Acylasen, sei es a) mittels mikrobieller Acylasen gemäß DE-OS 29 39 269, sei es b) durch Einsatz von Penicillin-G-acylase gemäß DE-OS 30 48 612. Nachteilig sind bei dem Verfahren a) die geringe optische Reinheit des erhaltenen L-Ptc, bei b) die aufwendige Aufarbeitung der Rohprodukte über Ionenaustauscher sowie die relativ hohen Kosten der zur Acylierung benötigten Phenylessigsäure.

Das einzige bisher bekannt gewordene nicht-enzymatische Verfahren zur Herstellung von L-Ptc, das in der EP-OS 127 429 beschrieben wird, benutzt ein chirales, nicht-racemisches Imin als Ausgangsmaterial, um in einem Alkylierungsschritt nach dem Prinzip der asymmetrischen Induktion (zur Erläuterung des Begriffs siehe: E.L. Eliel: Stereochemie der Kohlenstoffverbindungen S. 23-30, Verlag Chemie, Weinheim 1966) das chirale Kohlenstoffatom im L-Ptc aufzubauen.

Nachteilig bei diesem Verfahren ist allerdings, daß der teure chirale Hilfsstoff, der zur Herstellung des chiralen Imins verwendet wird, in äquimolaren Mengen benötigt wird und nach der Reaktion nicht wieder zurückgewonnen werden kann.

Es bestand daher die Aufgabe, ein einfaches Verfahren zu entwickeln, das die Herstellung von L-Phosphinothricin in größeren Mengen und mit hoher optischer Reinheit erlaubt.

Gegenstand der Erfindung ist somit ein Verfahren zur Herstellung von L-Homoalanin-4-yl(methyl)-phosphinsäure(estern) der allgemeinen Formel I und ihrer Salze, das dadurch gekennzeichnet ist, daß man R-3-Isopropyl-2,5-dialkoxy-3,6-dihydroprypazine der allgemeinen Formel II

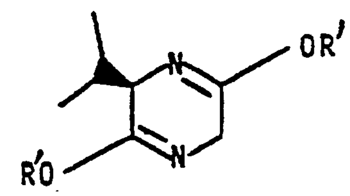
II

worin R' ($C_1$-$C_4$)Alkyl bedeutet,
zunächst in die Anionen III überführt,

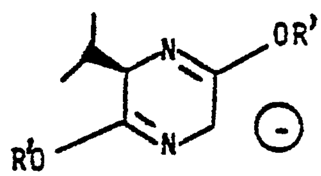
III

diese mit einer Verbindung der Formel IV

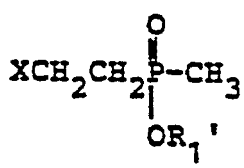
IV

worin $R_1'$ ($C_1$-$C_6$)Alkyl und X Chlor, Brom, Jod oder eine Abgangsgruppe wie Tosylat oder Mesylat bedeuten, umsetzt und die entstandenen Verbindungen der Formel V

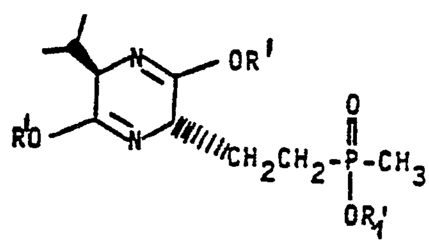
V

hydrolytisch spaltet.

Die Ausgangsstoffe der Formel II lassen sich analog Angew. Chem. 93, 793 (1981) auf einfache Weise aus D-Valin und Glycin herstellen. Der Reaktionsschritt II → III ist gleichfalls aus der genannten Literaturstelle bekannt wenngleich er dort am Beispiel der S-Enantiomeren von II

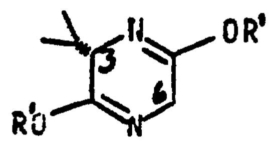

beschrieben ist.

Zum Verständnis der Symbole L und D bzw. S und R sei hier folgendes eingefügt:

D bzw. L legt die Konfiguration des zur Carboxylgruppe alphaständigen Kohlenstoffatoms in Verbindungen der Formel I fest. Aequivalent mit der Bezeichnung D ist nach allgemein gültigen Regeln (Angew. Chem. 78, 413 (1966) die Bezeichnung R. Ebenso wird anstelle der Bezeichnung L die Bezeichnung S verwendet. Mit R und S ist die absolute Konfiguration des jeweiligen Kohlenstoffatoms im Sinne der Cahn-Ingold-Prelog-Nomenklatur festgelegt (Angew. Chem. 78, 413 (1966)).

Weiterhin ist aus der Literaturstelle bekannt, daß sich die S-Enantiomeren von III mit Alkylhalogeniden in Position 6 alkylieren lassen, wobei nach dem Prinzip der asymmetrischen Induktion an C-6 ein neues Asymmetriezentrum geschaffen wird, das die entgegengesetzte absolute Konfiguration besitzt wie das Chiralitätszentrum an C-3.

Überraschend ist jedoch, daß als Alkylierungsmittel auch substituierte Alkylverbindungen der Formel IV mit einer Phosphinylgruppe verwendet werden können. Normalerweise werden nämlich Dialkylphosphinsäureester des Typs IV durch metallorganische Verbindungen, wie sie die Anionen III darstellen, in tertiäre Phosphanoxide überführt (Houben-Weyl; Meth. der org. Chemie, Band E2, S 34 (1982)).

Es folgt eine detaillierte Beschreibung der einzelnen Reaktionsstufen:

(a) Zur Bildung der Anionen III verwendet man starke metallorganische Basen, wie n-Butyllithium, Lithiumdiisopropylamid, Lithiumtetramethylpiperidid oder Natrium-bis-(trimethyl-silyl)amid in mindestens äquimolarer Menge, bevorzugt jedoch die 1-1,2-fache Menge, bezogen auf II. Als Lösungsmittel werden inerte Lösungsmittel wie Hexan, cyclische Ether z.B. Tetrahydrofuran oder Dioxan, Dialkylether, z.B. Diethylether, Diisopropylether oder Glykoldimethylether, vorzugsweise jedoch Tetrahydrofuran verwendet. Soweit erforderlich kann zur Erhöhung der Löslichkeit auch noch Hexamethylphosphorsäuretriamid oder 1,3-Dimethylimidazolidin-2-on zugesetzt werden. Die Reaktionstemperatur beträgt -80 bis -30°C, bevorzugt jedoch -80 bis -60°C.

(b) Zur Umsetzung von III mit IV werden dieselben Temperaturen und Lösungsmittel angewandt wie bei (a). Es empfiehlt sich, die Komponente IV im Überschuß, vorzugsweise bis zu 1.5 Mol pro Mol III, einzusetzen. Die Reaktionszeiten liegen zwischen 6 und 24 Stunden.

(c) Die hydrolytische Spaltung der Verbindung V erfolgt zweckmäßig mit einer ca. doppelt molaren Menge verdünnter Salzsäure. Dabei entsteht ein Gemisch aus D-Valinester und der Verbindung I in Form ihrer Ester (R bzw. $R_1$ = Alkyl). Diese können, falls gewünscht, durch saure oder basische Hydrolyse in ihre Salze und diese wiederum in freies L-Phosphinothricin überführt werden. Diese Methoden sind z.B. in der DE-OS 3 048 612 beschrieben.

Die Abtrennung des D-Valinesters, der bei dem erfindungsgemäßen Verfahren lediglich die Rolle eines chiralen Hilfsstoffs spielt und wieder zur Synthese des Ausgangsmaterials II eingesetzt werden kann, vom Reaktionsprodukt geschieht nach bekannten Verfahren, z.B. durch Destillation oder durch Extraktion der schwach ammonialkalischen Reaktionslösung mit einem organischen Lösungsmittel.

Nach dem erfindungsgemäßen Verfahren erhält man L-Phosphinothricin in mindestens 90 %iger optischer Reinheit.

Die nachfolgenden Beispiele sollen das Verfahren näher erläutern, ohne daß damit eine Einschränkung beabsichtigt ist.

Beispiel 1

(3R,6S)-3-Isopropyl-6-(2-(3-methylpropoxy-methylphosphinyl)ethyl)-2,5-dimethoxy-3,6-dihydropyrazin

5,53 g (0,03 mol) (3R)-(-)-3-Isopropyl-2,5-dimethoxy-3,6-dihydropyrazin ($[\alpha]_D^{25}$ = -107,5 °, c=1 in Ethanol) werden in 50 ml absolutem Tetrahydrofuran gelöst und bei -75° mit 20,6 ml einer 1,6-molaren n-Butyllithiumlösung in n-Hexan versetzt. Die Reaktionsmischung wird 15 min bei -75°C gerührt. Bei dieser Temperatur wird eine auf -60°C vorgekühlte Lösung von 6,1 g (0,031 mol) 2-Chlorethyl(methyl)phosphinsäure-2-methylpropylester in 30 ml Tetrahydrofuran innerhalb von 7 min zugetropft. Die Reaktionsmischung wird 6 Stunden bei -75°C und anschließend 14 Stunden bei Raumtemperatur gerührt. Das Lösungsmittel wird im Vakuum vollständig abgezogen und der Rückstand in 60 ml Diethylether aufgenommen. Diese Lösung wird einmal mit 60 ml Wasser und einmal mit 30 ml gesättigter Kochsalzlösung extrahiert. Die organische Phase wird über $MgSO_4$ getrocknet und vollständig eingeengt. Der Rückstand wird im Hochvakuum destilliert. Man erhält 8,84 g (85,1 % der Theorie) (3R,6S)-3-Isopropyl-6-[2-(3-methylpropoxy-methylphosphinyl)-ethyl]-2,5-dimethoxy-3,6-dihydropyrazin als niedrig schmelzenden Feststoff vom Kp. 155-162°C/0.001 bar.

Beispiel 2

[L-(3-Amino-3-methoxycarbonyl)propyl-1]-(methyl)phosphinsäureisobutylester

3,46 g (0,01 mol) (3R,6S)-3-Isopropyl-6-[2-(3-methylpropoxymethylphosphinyl)ethyl]-2,5-dimethoxy-3,6-dihydropyrazin werden in 80 ml 0,25-N Salzsäure (≙ 0,02 mol) suspendiert und 18 Stunden bei Raumtemperatur gerührt. Die neutrale Lösung wird mit Ammoniak auf pH 9,5 eingestellt und dreimal mit Diethylether extrahiert. Die vereinigten, organischen Extrakte werden über $MgSO_4$ getrocknet

und eingeengt. Zurück bleiben 1,3 g (≙ 100 % der Theorie) D-Valinmethylester.

Die wässrige Phase wird vollständig eingeengt und der Rückstand in Chloroform aufgenommen. Der ausgefallene Niederschlag (Ammoniumchlorid) wird abfiltriert und das Filtrat vollständig eingeengt.

Man erhält 2,4 g (95,5% der Theorie) [L-(3-Amino-3-methoxycarbonyl)propyl-1]-(methyl)phosphinsäureisobutylester als farbloses Oel.

$^1$H-NMR ($d_6$-DMSO): 0,88 (d, J=7,0 Hz, 6H), 1,40 (d, J=14,0 Hz, 3H), 1,57–2,20 (m, 5H), 3,64 (t, J=7,0 Hz, 2H), 3,72 (s, 3H), 3,83–4,02 (m, breit, 1H)
$[\alpha]D^{22}$ = 13,8° (c = 3.24 in 1 N HCl)

Beispiel 3

L-Homoalanin-4-yl(methyl)phosphinsäure

a) 2,0 g (0,008 mol) [L-(3-Amino-3-methoxycarbonyl)propyl-1]-(methyl)phosphinsäureisobutylester werden in 50 ml 6-N Salzsäure gelöst und 15,5 Stunden am Rückfluß gekocht. Die wässrige Lösung wird vollständig eingeengt und der verbleibende Rückstand mit Aceton/Toluol azeotrop entwässert. Man erhält 1,5 g (86,7% der Theorie) L-Homoalanin-4-yl(methyl)phosphinsäurehydrochlorid als weißen Feststoff, der durch Umkristallisation aus einem Ethanol/Wasser-Gemisch gereinigt wird.

Fp. 197–199°C (Zers.), $[\alpha]D^{22}$ = 22.5° (c = 1.96 in 1 N HCl)

b) 0,291 g des Hydrochlorids werden in Ethanol/Wasser gelöst und mit 0,1 g Prophenoxid versetzt. Nach eintägigem Stehen bei Raumtemperatur erhält man 0,17 g (72,2% der Theorie) L-Homoalanin-4-yl(methyl)phosphinsäure als weißen Feststoff von Fp. 214–16°C (Zers) mit einem Drehwinkel $[\alpha]D^{22}$ von 15.9° (c = 1,04 in $H_2O$). Dies entspricht einer optischen Reinheit von mindestens 93%, bezogen auf $[\alpha]D^{23}$= 17° (c=1 in $H_2O$) für optisch reine L-Homoalanin-4-yl(methyl)phosphinsäure [Sci. Reports of Meiji Seika Kaisha 13, 42 (1973)].

**Patentansprüche**

1) Verfahren zur Herstellung von L-Homoalanin-4-yl-(methyl)phosphinsäure(estern) der Formel

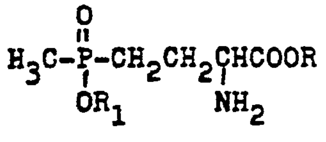 I

worin R und $R_1$ gleich oder verschieden sind und Wasserstoff oder ($C_1$-$C_6$)Alkyl bedeuten, sowie von deren Salzen, dadurch gekennzeichnet, daß man R-3-Isopropyl-2,5-dialkoxy-3,6-dihydropyrazine der allgemeinen Formel II

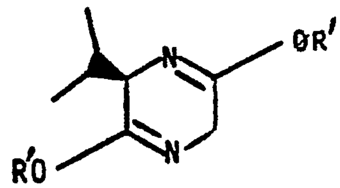 II

worin R' ($C_1$-$C_4$)Alkyl bedeutet, zunächst in die Anionen III überführt,

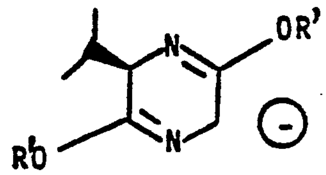

diese mit einer Verbindung der Formel IV

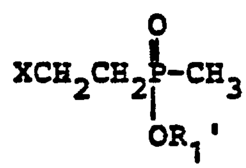 IV

worin $R_1$' ($C_1$-$C_6$)Alkyl und X Chlor, Brom, Jod oder eine Abgangsgruppe wie Tosylat oder Mesylat bedeuten, umsetzt und die entstandenen Verbindungen der Formel V

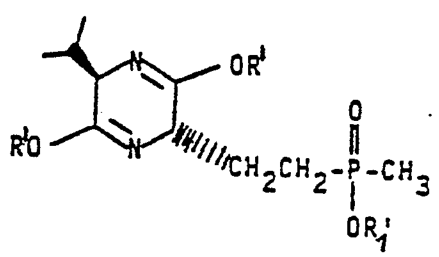 V

hydrolytisch spaltet.

2) Verfahren nach Anspruch 1, dadurch gekennzeichnet, daß man zur Überführung in das Anion III starke, metallorganische Basel wie n-Butyllithium, Lithiumdiisopropylamid, Lithiumtetramethylpiperidid oder Natrium-bis-(trimethylsilyl)amid verwendet.

3) Verfahren nach Anspruch 2, dadurch gekennzeichnet, daß man zur Erhöhung der Löslichkeit Hexamethylphosphorsäuretriamid oder 1,3-Dimethylimidazolidin-2-on zusetzt.

4) Verfahren nach Anspruch 2, dadurch gekennzeichnet, daß man die Reaktion bei –80°C bis –30°C, bevorzugt bei –80°C bis –60°C.

**Claims**

1. A process for the preparation of L-homoalanin-4-yl-(methyl)phosphinic acid (esters) of the formula

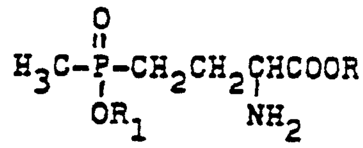

I

in which R and $R_1$ are identical or different and denote hydrogen or ($C_1$–$C_6$)-alkyl, and of salts thereof, which comprises first converting R-3-isopropyl-2,5-dialkoxy-3,6-dihydropyrazines of the formula II

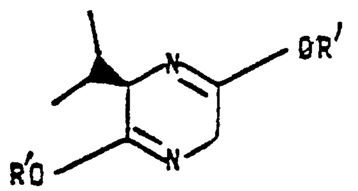

II

in which R′ denotes ($C_1$–$C_4$)-alkyl into the anions III

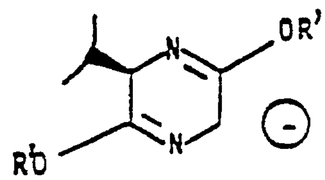

reacting these anions with a compound of the formula IV

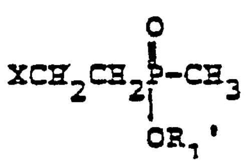

IV

in which $R_1$′ denotes ($C_1$–$C_6$)-alkyl and X denotes chlorine, bromine, iodine or a detachable group such as tosylate or mesylate, and subjecting the resulting compounds of the formula V

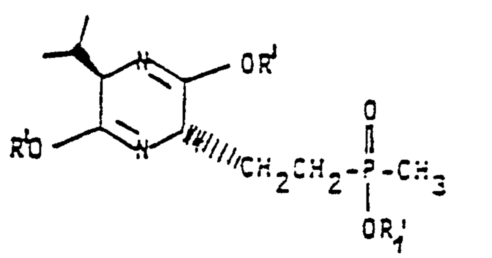

V

to hydrolytic cleavage.

2. The process as claimed in claim 1, wherein strong organometallic bases, such as N-butyllithium, lithium diisopropylamide, lithium tetrametylpiperidide or sodium bis-(trimethylsilyl)-amide, are used for the conversion into the anion III.

3. The process as claimed in claim 2, wherein hexamethylphosphoric acid triamide or 1,3-dimethylimidazolidin-2-one is added in order to increase the solubility.

4. The process as claimed in claim 2, wherein the reaction is carried out at –80°C to –30°C, preferably at –80°C to –60°C.

**Revendications**

1. Procédé pour préparer un acide L-homoalaninyl-(méthyl) phosphinique, ou ses esters, de formule:

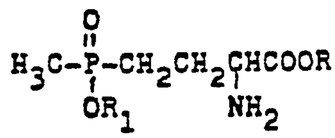

I

(dans laquelle les symboles R et $R_1$ sont identiques ou différents et représentent chacun un atome d'hydrogène ou un groupe alkyle en $C_1$ à $C_6$) ainsi que leurs sels, procédé caractérisé en ce qu'on transforme des R-isopropyl-3 dialcoxy-2,5 dihydro-3,6 pyrazines de formule générale II:

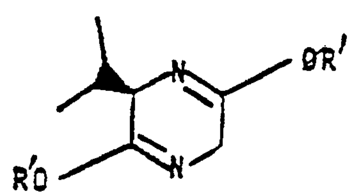

II

(dans laquelle chaque R′ représente un groupe alkyle ayant 1 à 4 atomes de carbone), tout d'abord en les anions III:

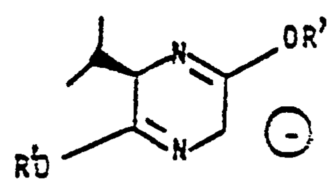

III

on fait réagir ceux-ci avec un composé de formule IV:

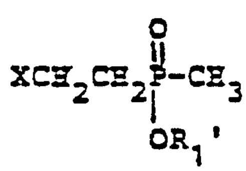

IV

(dans laquelle R′ représente un groupe alkyle en $C_1$ à $C_6$ et X représente un atome de chlore, de brome ou d'iode ou un groupe partant, tel qu'un groupe tosylate ou mésylate), et l'on soumet à scission ou séparation hydrolytique les composés résultants, de formule V:

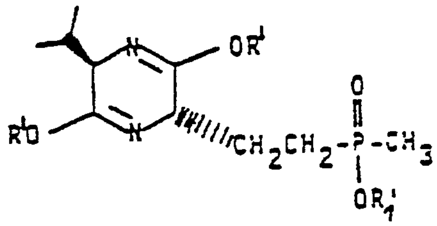

V

2. Procédé selon la revendication 1, caractérisé en ce que, pour la transformation en l'anion III, on utilise des bases organométalliques fortes, comme le butyllithium, le lithium diisopropylamide, le lithium-tétraméthylpipéridide ou les sodium-bis (triméthyl-silyl) amide.

3. Procédé selon la revendication 2, caractérisé en ce que, pour augmenter la solubilité, on ajoute du triamide hexaméthylique de l'acide phosphorique ou de la diméthyl-1,3 imidazolidinone-2.

4. Procédé selon la revendication 2, caractérisé en ce qu'on conduit la réaction entre –80°C et –30°C, de préférence entre –80°C et –60°C.